(19) Europäisches Patentamt
European Patent Office
Office européen des brevets

(11) Veröffentlichungsnummer: **0 312 890**
**A2**

(12) **EUROPÄISCHE PATENTANMELDUNG**

(21) Anmeldenummer: 88116857.9

(22) Anmeldetag: 11.10.88

(51) Int. Cl.[4]: C08G 18/08 , C08G 18/10 , C08G 18/40 , C08G 18/50

(30) Priorität: 21.10.87 DE 3735587

(43) Veröffentlichungstag der Anmeldung: 26.04.89 Patentblatt 89/17

(84) Benannte Vertragsstaaten: BE DE ES FR GB IT NL

(71) Anmelder: BAYER AG
Konzernverwaltung RP Patentabteilung
D-5090 Leverkusen 1 Bayerwerk(DE)

Anmelder: MOBAY CORPORATION
Patent Department Mobay Road
Pittsburgh Pennsylvania 15205-9741(US)

(72) Erfinder: Dormish, Jeffrey, Dr.
1125 Folkstone Dr.
Pittsburgh, Pa. 15243(US)
Erfinder: Henning, Wolfgang
Zur Linde 27
D-5067 Kuerten(DE)

(74) Vertreter: Gremm, Joachim, Dr.
Bayer AG Konzernverwaltung RP
Patentabteilung
D-5090 Leverkusen, Bayerwerk(DE)

(54) **Verfahren zur Herstellung von wässrigen Polyurethan-Polyharnstoffdispersionen.**

(57) Wäßrige Polyurethan-Polyharnstoffdispersionen werden hergestellt durch Umsetzung eines Isocyanates mit wenigstens zwei isocyanatreaktiven Verbindungen von denen die eine ionische oder potentiell ionische Gruppen aufweist, wobei das Isocyanat zunächst mit der ionische oder potentiell ionische Gruppen aufweisenden Verbindungen umgesetzt wird.

EP 0 312 890 A2

## Verfahren zur Herstellung von wäßrigen Polyurethan-Polyharnstoffdispersionen

Die vorliegende Erfindung betrifft .ein Verfahren zur Herstellung stabiler wäßriger Dispersion von Polyurethan-Polyharnstoffen sowie die Dispersionen.

Polyurethan-Polyharnstoffe werden in einer Vielzahl kommerzieller Anwendungen eingesetzt wie beispielsweise als Klebstoffe oder als Beschichtungsmittel für verschiedene Substrate wie Textilien, Kunststoffen, Holz, Glasfasern, Leder und Metallen. Chemikalienbeständigkeit, Abriebfestigkeit, Zähigkeit, Zugfestigkeit, Elastizität und Haltbarkeit sind einige mögliche Eigenschaften dieser Materialien.

Es gehört zum Stand der Technik, daß Polyurethan-Polyharnstoffe als Beschichtungsmittel oder als Klebstoffe aus Lösungen in organischen Lösungsmitteln angewendet werden. Dies ist aus ökonomischer Sicht unvorteilhaft aufgrund der hohen Kosten der Lösungsmittel, aber noch bedeutender ist die durch die Lösungsmittel verursachte Belastung der Atmosphäre.

Es sind daher zahlreiche Versuche unternommen worden, Polyurethan-Polyharnstoff Beschichtungen aus Dispersionen dieser Polvmeren in Wasser herzustellen. Diese Verfahrensweise ist ökonomisch aufgrund der Verwendung von Wasser als Lösungsmittel und belastet nicht die Atmosphäre. Allerdings sind Polyurethan-Polyharnstoffe mit Wasser unverträglich, d.h., sie bilden keine stabilen Dispersionen in Wasser, falls man nicht spezielle Herstellungsprozesse oder Zusatzstoffe bei der Herstellung verwendet.

In frühere Methoden zur Herstellung stabiler Dispersionen von Polyurethan-Polyharnstoffen wurden externe Emulgatoren zur Dispergierung und Stabilisierung der Polymeren in Wasser eingesetzt, wie es beispielsweise in US-A-2 968 575 beschrieben ist. Diese Verfahrensweise erlaubte zwar die Herstellung derartiger Dispersion. Die daraus hergestellten Beschichten wiesen allerdings erhebliche Nachteile auf, wie beispielsweise hohe Wasserempfindlichkeit aufgrund der Gegenwart dieser Emulgatoren.

In weiteren Entwicklungen wurden derartige Emulgatoren verwendet, die chemisch in die Polyurethan-Polyharnstoffkette eingebaut wurden. Derartige ionische Emulgatoren sind beispielsweise in US-A-3 479 310 beschrieben. Die Verwendung von einbaubaren nichtionischen Emulgatoren wird beispielsweise in US-A-3 905 929, US-A-3 920 598 und US-A-4 190 566 beschrieben. Weitere Verbesserungen der Eigenschaften von Beschichtungen aus Polyurethan-Polyharnstoff Dispersionen wurden durch die Kombination von ionischen und nichtionische Aufbaukomponenten erzielt, wie es beispielsweise in US-A-4 092 286, US-A-4 237 264 und US-A-4 238 378 beschrieben ist.

Diese Entwicklungen führten zu Dispersionen mit verbesserten Stabilitäten und gleichzeitig mit einem reduzierten Gehalt an hydrophilen Aufbaukomponenten. Durch die Verringerung des Gehaltes an hydrophilen Aufbaukomponenten war die Herstellung von Beschichtungen aus diesen Dispersionen möglich, die sich durch eine verbesserte Wasserbeständigkeit und niedrigeren Verlust an mechanischen Festigkeiten im gequollenen Zustand auszeichneten. In US-A-4 066 591 wird die Herstellung von Polyurethan-Polyharnstoff-Dispersionen beschrieben, die durch Dispergierung von endständige Isocyanatgruppen aufweisenden Prepolymeren in Wasser und anschließende Kettenverlängerung mit Diaminen gewonnen werden. Die Ionengruppen enthaltenden Prepolymere aus US-A-4 066 591 werden auf einfache Weise durch Reaktion der überschüssigen Isocyanatgruppen mit aktive Wasserstoffgruppen enthaltenden Aufbaukomponenten mit ionischen oder potentiell ionischen Gruppen bis zum Erreichen des theoretischen Gehalts an freien Isocyanatgruppen erhalten. Eine spezielle Reihenfolge der Reaktionen der Aufbaukomponenten wird nicht beschrieben.

In US-A-4 408 008 wird ebenfalls die Herstellung von Isocyanatgruppen aufweisenden Polymeren und anschließender Dispergierung in Wasser beschrieben. Die Prepolymere werden aus organischen Polyisocyanaten, Verbindungen mit mindestens zwei gegenüber Isocyanatgruppen reaktiven Gruppen, organischen Verbindungen mit hydrophilen Ethylenoxideinheiten und gegebenenfalls organischen Verbindungen mit ionischen oder potentiell ionischen Gruppen hergestellt.

In US-A-4 203 883 werden Dispersionen aus tert.-Aminsalzen von Polyurethan-Harnstoffen aus Triamin enthaltenden Polyaminen und NCO-endständigen Urethan-Prepolymeren mit Carboxylgruppen beschrieben. Im Sinne dieser Erfindung können die NCO-endständigen Prepolymere durch Reaktion der Isocyanate und Polyole in einem simultanen oder einem schrittweisen Prozeß hergestellt werden. Keine spezielle Beeinflussung der Eigenschaften der hieraus hergestellten Dispersionen aufgrund der schrittweisen Reaktionsführung wird beschrieben.

In US-A-4 554 308 werden vernetzte Polyurethandispersionen aus Carboxylatgruppen enthaltenden NCO-endständigen Prepolymeren beschrieben. Es werden Beispiele angeführt, in denen die Carboxylgruppen in das Prepolymer in dem zweiten Schritt eines schrittweisen Reaktionsablaufs eingebaut werden. Auch hier wird keine spezielle Beeinflussung der Eigenschaften der Reaktionsführung beschrieben.

Nachteilig an dem bekannten Polyurethan-Polyharnstoffdispersionen ist, daß relativ viele ionische Gruppen eingebaut werden müssen, um eine gute Dispergierbarkeit zu erreichen.

Aufgabe der Erfindung ist, ein verbessertes Verfahren aufzufinden zur Herstellung von Polyurethan-Polvharnstoffdispersionen, bei dem die zur Dispergierung erforderliche Menge von ionischen Gruppen reduziert ist.

Gegenstand der Erfindung ist ein Verfahren zur Herstellung von stabilen Polyurethan-Polyharnstoffdispersionen in einem mehrstufigen Verfahren durch Umsetzung eines Isocyantes a) mit wenigstens zwei isocyanatreaktiven Verbindungen b1) und b2) von denen die Verbindung b1) wenigstens eine ionische oder potentiell ionische hydrophile Gruppe aufweist, dadurch gekennzeichnet, daß

1) das Isocyanat a) mit der Verbindung b1) umgesetzt wird und anschließend

2) das hierbei entstehende Produkt mit der Verbindung b2) umgesetzt wird und gegebenenfalls mit einer Ethylenoxideinheiten enthaltenden Verbindung b3) und

3) das erhaltene Prepolymere in Wasser dispergiert wird, wobei der Gehalt an ionischen Gruppen im Prepolymeren maximal 50 Milliäquivalenten pro 100 g Prepolymer beträgt.

In einer bevorzugten Ausführungsform wird während der gesamten Herstellung in einem NCO-Überschuß gearbeitet. In einer anderen bevorzugten Ausführungsform handelt es sich bei den Prepolymeren um ein lineares Prepolymer mit einem Molekulargewicht von maximal 25.000.

In einer weiteren bevorzugten Ausführungsform wird das Prepolymer mit einem Kettenverlängerer während oder nach der Dispergierung in Wasser umgesetzt.

In einer besonders bevorzugten Ausführungsform handelt es sich bei der Verbindung b2) um eine zur Kristallisation neigende Verbindung mit einem Molekulargewicht von mindestens 1.500.

Nach dem erfindungsgemäßen Verfahren werden bei einem bestimmten Gehalt an ionischen Gruppen im Prepolymer stabilere und feinteiligere Dispersionen hergestellt, als es nach den bekannten Verfahren möglich ist. In vielen Fällen werden bei einem bestimmten Gehalt an ionischen Gruppen feinteilige, stabile Dispersionen erhalten, wobei nach den bekannten Verfahren nur unstabile und sedimentierende Produkte erhalten werden.

Nach dem erfindungsgemäßen Verfahren ist es möglich, Dispersionen mit vorgegebenen mittleren Teilchengrößen zu erzeugen unter Verwendung von geringeren Ionenmengen als es die Verfahren nach dem bekannten Stand der Technik ermöglichen. Durch die Verwendung geringerer Mengen an hydrophilen Gruppen wird durch die vorliegende Erfindung die Herstellung von Beschichtungen und Klebstoffen mit einer geringeren Neigung zur Wasseraufnahme und dadurch bedingt einer geringeren Verschlechterung der mechanischen Eigenschaften aufgrund der Wasseraufnahme ermöglicht, welches einen erheblichen Vorteil darstellt.

Gegenstand der Erfindung sind weiterhin erfindungsgemäß erhaltende Produkte sowie deren Verwendung zur Herstellung von Beschichtungen von flexiblen oder nichtflexiblen Substraten und insbesondere deren Verwendung als Klebstoff.

Für das erfindungsgemäße Verfahren geeignete Aufbaukomponenten a) sind beispielsweise

Diisocyanate der Formel $Q(NCO)_2$, wobei Q einen aliphatischen Kohlenwasserstoffrest mit 4 bis 18 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet, Beispiele derartiger bevorzugt einzusetzender Diisocyanate sind Tetramethylendiisocyanat, Hexamethylendiisocyanat, Dodecamethylendiisocyanat, l,4-Diisocyanatocyclohexan, 1-Isocyanato-3,3,5-trimethyl-5-isocyanatomethylcyclohexan, 4,4′Diisocyanatodicyclohexylmethan, 4,4′-Diisocyanato-dicyclohexylpropan-(2,2), 1,4-Diisocyanatobenzol, 2,4-Diisocyanato-toluol, 2,6-Diisocyanatotoluol, 4,4′-Diisocyanatodiphenyl-methan, 4,4′-Diisocyanatodiphenylpropan-(2,2), p-Xylylen-diisocyanat oder α,α,α′,α′-Tetramethyl-m- oder -p-xylylen-diisocyanat, sowie aus diesen Verbindungen bestehende Gemische.

Grundsätzlich ist es auch möglich, beim erfindungsgemäßen Verfahren die beispielhaft genannten Aufbaukomponenten a) in Kombination mit höherfunktionellen nieder molekularen Polyisocyanaten wie beispielsweise dem Umsetzungsprodukt von 3 Mol 2,4-Diisocyanatotoluol mit einem Mol Trimethylolpropan und/oder in Kombination mit monofunktionellen Isocyanaten wie Phenylisocyanat, Hexylisocyanat oder n-Dodecylisocyanat einzusetze., Auch der Einsatz von monofunktionellen Polyetherketten mit eingebauten Ethylenoxideinheiten aufweisenden Isocyanaten der beispielsweise in den US-Patentschriften 3 920 598 bzw. 4 237 264 genannten Art ist prinzipiell möglich.

Bei Verwendung derartiger monofunktioneller Isocyanate ist jedoch im allgemeinen, insbesondere bei der Herstellung von hochmolekularen Polyurethanen, durch gleichzeitige Mitverwendung von höher als difunktionellen Aufbaukomponenten ein vorzeitiger Kettenabbruch zu verhindern. Vorzugsweise werden

beim erfindungsgemäßen Verfahren difunktionelle Isocyanate der oben beispielhaft genannten Art als Aufbaukomponente a) verwendet.

Als bevorzugte Verbindungen b1) werden Verbindungen mit gegenüber Isocyanatgruppen reaktionsfähigen Wasserstoffatomen mit anionischen Gruppen oder in anionische Gruppen überführbare Gruppen, wie sie beispielsweise in US-PS 3 756 992, US-PS 3 479 310 oder US-PS 4 108 814 beschrieben sind, verwendet.

Vorzugsweise werden beim erfindungsgemäßen Verfahren als anionische oder potentiell anionische Aufbaukomponenten b1) Sulfonatgruppen aufweisende aliphatische Diole gemäß DT-0S 2 446 440 und DT-OS 2 437 218 verwendet.

Zu den besonders bevorzugten (potentiellen) ionischen Aufbaukomponenten mit Sulfonat-Gruppen, die ins Prepolymer eingebaut werden können, gehören Sulfonatdiole der allgemeinen Formel

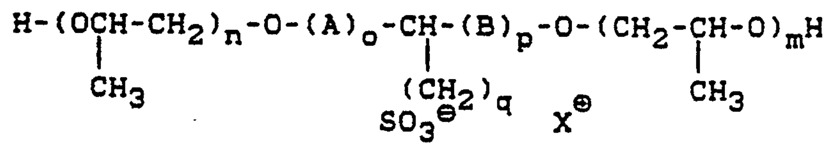

wobei

A und B für gleiche oder verschiedene zweiwertige aliphatische Kohlenwasserstoffreste mit 1 bis 6 Kohlenstoffatomen stehen,

R für Wasserstoff, einen aliphatischen Kohlenwasserstoffrest mit 1 bis 4 Kohlenstoffatomen oder einen Phenylrest steht,

$X^{\oplus}$ für ein Alkalimetallkation oder eine gegebenenfalls substituierte Ammoniumgruppe steht;

n und m für gleiche oder verschiedene Zahlen von 0 bis 30 stehen,

o und p für jeweils 0 oder 1 stehen und

q für eine ganze Zahl von 0 bis 2 steht.

Besonders bevorzugte Verbindungen b1) sind beispielsweise das propoxylierte Addukt von 2-Butendiol-1,4 und einem Sulfit, insbesondere $NaHSO_3$, insbesondere mit n + m = 4.

Die Verbindungen b1) werden bevorzugt in Lösungen beispielsweise in Toluol, verwendet.

Für das erfindungsgemäße Verfahren geeignete Aufbaukomponenten b2) sind beispielsweise Verbindungen mit mindestens zwei gegenüber Isocyanatgruppen reaktionsfähigen Gruppen, insbesondere insgesamt zwei Aminogruppen, Thiolgruppen, Carboxylgruppen und/oder Hydroxylgruppen aufweisende organische Verbindungen des Molekulargewichtsbereichs 61 bis 10.000, vorzugsweise 300 bis 6.000, insbesondere bevorzugt 1.500 bis 5.000. Bevorzugt werden die entsprechenden Dihydroxyverbindungen eingesetzt. Die Mitverwendung von im Sinne der Isocyanat-Polyadditionsreaktion tri- oder höherfunktionellen Verbindungen wie beispielsweise Trimethylolpropan, in geringen Anteilen zur Erzielung eines gewissen Verzweigungsgrades ist ebenso möglich wie die bereits erwähnte mögliche Mitverwendung von tri-oder höherfunktionellen Polyisocyanaten zum gleichen Zweck.

Vorzugsweise einzusetzende Hydroxylverbindungen sind die in der Polyurethan-Chemie an sich bekannten Hydroxypolyester, Hydroxypolyether, Hydroxypolythioether, Hydroxypolyacetale, Hydroxypolycarbonate und/oder Hydroxypolyesteramide. Die infrage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Poly carbonsäureester von niederen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls z.B: durch Halogenatome, substituiert und/oder ungesättigt sein. Als Beispiele hierfür seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäurebis-glykolester. Als mehrwertige Alkohole kommen z.B. Ethylenglykol, Propylenglykol-(1,2) und -(1,3), Butylenglykol-(1,4) und -(2,3) und --(1,3), Hexandiol-(1,6), Octandiol-(1,8), Neopentylglykol, Cyclohexandimethanol-(1,4-bis-hydroxymethylcyclohexan), 2-Methyl-1,3-propandiol, Glycerin, Trimethylolpropan, Hexantriol-(1,2,6), Butantriol-(1,2,4), Trimethy-

iolethan, Pentaerythrit, Chinit, Mannit und Sorbit, Methylglykosid, ferner Diethylenglykol, Triethylenglykol, Tetraethylenglykol, Polyethylenglykole, Dipropylenglykol, Polypropylenglykole, Dibutylenglykol und Polybutylenglykole infrage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Auch die erfindungsgemäß infrage kommenden, vorzugsweise zwei Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Epoxide, gegebenenfalls im Gemisch oder nacheinander, an Startkomponenten mit reaktionsfähigen Wasserstoffatomen wie Alkohole und Amine, z.B. Wasser, Ethylenglykol, Propylenglykol-(1,3) oder -(1,2), 4,4′-Dihydroxy-diphenylpropan, Anilin, hergestellt.

Auch durch Vinylpolymerisate modifizierte Polyether wie sie z.B. durch Polymerisation von Styrol, Acrylnitril in Gegenwart von Polyethern entstehen (amerikanische Patentschriften 3 383 351, 3 304 273, 3 523 093, 3 110 695, deutsche Patentschrift 1 152 536), sind ebenfalls geeignet. Die anteilig gegebenenfalls mitzuverwendenden höherfunktionellen Polyether entstehen in analoger Weise durch an sich bekannte Alkoxylierung von höherfunktionellen Startermolekülen z.B. Ammoniak, Ethanolamin, Ethylendiamin oder Sukrose.

Unter den Polyethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den CO-Komponenten handelt es sich bei den Produkten um Polythiomischether, Polythioetherester, Polythioetheresteramide.

Als Polyacetale kommen z.B. die aus Glykolen, wie Diethylenglykol, Triethylenglykol, 4,4′-Diethoxy-diphenyldimethylmethan, Hexandiol und Formaldehyd herstellbaren Verbindungen infrage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol mit Diarylcarbonaten, z.B. Diphenylcarbonat oder Phosgen, hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate. Auch bereits Urethan- oder Harnstoffgruppen enthaltende Polyhydroxylverbindungen sind verwendbar.

Auch niedermolekulare Polyole können (mit)verwendet werden, wie z.B. Ethandiol, Propandiol-1,2 und -1,3, Butandiol-1,4 und -1,3, Pentandiole, Hexandiole, Trimethylolpropan, Hexantriole, Glycerin und Pentaerythrit. In geringen Mengen können auch monofunktionelle Alkohole mitverwendet werden, wie z.B. Stearylalkohol.

Vertreter der genannten im erfindungsgemäßen Verfahren zu verwendenden Polyisocyanat- und Hydroxyl-Verbindungen sind z.B. in High Polymere, Vol XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Als beim erfindungsgemäßen Verfahren zur Herstellung der selbst dispergierbaren Polyurethane mitzuverwendende Kettenverlängerer eines unter 300 liegenden Molekulargewichts kommen beispielsweise die bei der Herstellung der Dihydroxypolyester beschriebenen niedermolekularen Diole oder auch Diamine, wie Diaminoethan, N,N′-Dimethyl-diaminoethan, 1,6-Diaminohexan, Piperazin, 2,5-Dimethylpiperazin, l-Amino-3-aminomethyl-3,5,5-trimethylcyclohexan, 4,4′-Diaminodicyclohexylmethan, 1,4-Diaminocyclohexan, 1,2-Propylendiamin oder auch Hydrazin, Aminosäurehydrazide, Hydrazide von Semicarbazidocarbonsäuren, Bis-hydrazide und Bis-semicarbazide in Betracht.

Als Kettenabbrecher eines unter 300 liegenden Molekulargewichts kommen monofunktionelle Alkohole wie z.B. Methanol, Ethanol, n-Octanol oder n-Dodecanol und insbesondere Ammoniak oder primäre Amine in Betracht, wie sie beispielsweise in der DE-A-2 637 690 beschrieben sind.

In einer bevorzugten Ausführungsform enthalten die erfindungsgemäß hergestellten Prepolymeren endständig oder seitenständig eingebaute hydrophile Ethylenoxideinheiten von vorzugsweise 0 bis 15 Gew.-%, insbesondere 0 - 10 Gew.-%. Zur Einführung dieser Ethylenoxideinheiten sind als Verbindungen b3) beliebige Monoisocyanate mit endständigen Ethylenoxideinheiten und/oder beliebige Diisocyanate mit seitenständigen Ethylenoxideinheiten und/oder im Sinne der Isocyanatpolyadditionsreaktion mono- oder difunktioneller Verbindungen mit gegenüber Isocyanatgruppen reaktionsfähigen Wasserstoffatomen mit endständigen oder seitenständigen Ethylenoxideinheiten, wie sie beispiels-weise in DE-OS 2 314 512, DE-OS 2 314 513, DE-0S 2 551 094, DE-OS 2 651 506, US-PS 3 920 598 oder US-PS 3 905 929 beschrieben

sind, sowie deren Gemische, geeignet.

Bevorzugte Aufbaukomponenten b3) mit nichtionischen, hydrophilen Gruppen sind solche Verbindungen der allgemeinen Formel

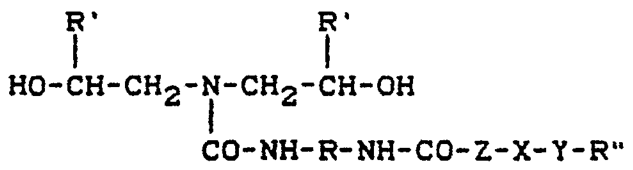

(I)

und/oder Verbindungen der Formel

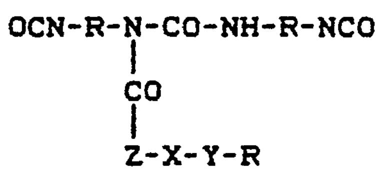

(II)

Besonders bevorzugte Aufbaukomponente b3) sind solche der erstgenannten Formel (I).

In obigen Formeln (I) und (II) stehen

R für einen zweiwertigen Rest, wie er durch Entfernung der Isocyanatgruppen aus einem Diisocyanat der Formel $R(NCO)_2$ der vorstehend genannten Art erhalten wird,

$R'$ für Wasserstoff oder einen einwertigen Kohlenwasserstoffrest mit 1 bis 8 Kohlenstoffatomen, vorzugsweise für Wasserstoff oder eine Methylgruppe, $R''$ für einen einwertigen Kohlenwasserstoffrest mit 1 bis 12 Kohlenstoffatomen, vorzugsweise einen unsubstituierten Alkylrest mit 1 bis 4 Kohlenstoffatomen,

X für eine Polyalkylenoxidkette mit 5 bis 90, vorzugsweise 20 bis 70 Kettengliedern, welche zumindest zu 40 %, vorzugsweise zumindest zu 65 % aus Ethylenoxideinheiten bestehen und die neben Ethylenoxideinheiten auch Propylenoxid-, Butylenoxid-oder Styroloxid-Einheiten darstellen können, wobei unter den letztgenannten Einheiten Propylenoxideinheiten bevorzugt sind,

Y für Sauerstoff oder $-NR'''-$, wobei $R'''$ bezüglich seiner Definition $R''$ entspricht,

Z für einen Rest, der in seiner Bedeutung der Definition von Y entspricht oder zusätzlich -NH- entspricht.

Die Herstellung der Verbindungen der obengenannten Formeln (I) und (II) kann gemäß den Verfahrensweisen der DT-0S 2 314 512 bzw. 2 314 513 erfolgen, wobei in Ergänzung der dort gemachten Offenbarung darauf hingewiesen wird, daß anstelle der dort als Ausgangsmaterial erwähnten monofunktionellen Polyetheralkohole auch solche eingesetzt werden können, deren Polyethersegment außer Ethylenoxideinheiten auch bis zu 60 Gew.-%, bezogen auf Polyethersegment, an Propylenoxid-, Butylenoxid- oder Styroloxid-, vorzugsweise Propylenoxideinheiten aufweisen. Der Anteil derartiger "gemischter Polyethersegmente" kann in speziellen Fällen spezifische Vorteile mit sich bringen.

Weitere bevorzugte hydrophile Einbaukomponenten mit endständigen oder seitenständigen Ethylenoxideinheiten sind solche Verbindungen der allgemeinen Formel

$$H - Y' - X - Y - R''$$

und/oder Verbindungen der allgemeinen Formel

$$OCN - R - NH - CO - Z - X - Y - R''$$

worin

X, Y, Z, R und $R''$ die oben definierten Bedeutungen haben und

$Y'$ der Definition von Y oder zusätzlich -NH- entspricht.

Monofunktionelle Polyether werden bevorzugt eingesetzt, allerdings bevorzugt nur in molaren Mengen ≦10 % des eingesetzten Polyisocyanats, um den Aufbau von hohen Molekulargewichten des Polyurethans zu gewährleisten.

In Fällen, in denen relativ hohe Mengen monofunktioneller Ethylenoxid-Gruppen enthaltende Polyether eingesetzt werden, kann es von Vorteil sein, im Sinne der Isocyanat-Additionsreaktion trifunktionelle Verbindungen mitzuverwenden.

Die monofunktionell, hydrophilen Komponenten werden nach dem in US-PS 3 905 929 und 3 920 598 beschriebenen Verfahren hergestellt durch Alkoxylierung von monofunktionellen Startern wie n-Butanol mit Ethylenoxid und gegebenenfalls weiteren Alkylenoxiden wie z.B. Propylenoxid. Das erhaltene Produkt kann gegebenenfalls weiter modifiziert werden durch Umsetzung mit einem Überschuß an Diisocyanaten oder durch Reaktion mit Ammoniak unter Bildung von den entsprechenden primären Aminopolyethern.

Der Gehalt an anionischen oder potentiell anionischen Gruppen wird so bemessen, daß im Prepolymer 0,5 bis 50 Milliäquivalente, bevorzugt 0,5 bis 30 Milliäquivalente und besonders bevorzugt 0,5 bis 20 Milliäquivalente, pro 100 g Feststoff enthalten sind. Der Gehalt an eingebauten, hydrophilen Ethylenoxideinheiten kann 0 bis 15 Gew,-%, bevorzugt 0,8 bis 10 Gew.-% und besonders bevorzugt 1,0 bis 6 Gew.-% bezogen auf Prepolymerfeststoff, betragen.

Die erfindungsgemäßen NCO-endständigen Prepolymere werden in einem Mehrstufenverfahren hergestellt. In dem ersten Schritt wird das Polyisocyanat mit der gesamten Menge oder nahezu der gesamten Menge an der ionischen Gruppen oder potentiell ionische Gruppen aufweisenden Aufbaukomponente b1) zur Reaktion gebracht. Die Reaktionstemperatur wird vorzugsweise unterhalb 150 °C, bevorzugt zwischen 50 und 130 °C, gehalten. In den nachfolgenden Schritt(en) der Prepolymerherstellung werden die weiteren gegenüber Isocyanatgruppen reaktionsfähigen Verbindungen b2) und gegebenenfalls b3) mit dem Produkt der ersten Reaktionsstufe umgesetzt. Das Äquivalentverhältnis von Isocyanatgruppen zu gegenüber Isocyanatgruppen reaktiven Gruppen beträgt vorzugsweise 1,1:3, bevorzugt 1,2:2 und besonders bevorzugt 1,2:1,8. Wird das organische Isocyanat mit den gegenüber Isocyanatgruppen reaktiven Verbindungen bl), b2) und b3) gleichzeitig zur Reaktion gebracht, werden gegenüber dem erfindungsgemäßen Verfahren Produkte mit schlechteren Eigenschaften erhalten, erkennbar an der Stabilität der Dispersion oder der Teilchengröße.

Die Reaktion zur Herstellung der Prepolymeren wird vorzugsweise solange durchgeführt, bis der Gehalt an freien NCO-Gruppen dem theoretischen Wert entspricht, oder diesen leicht unterschreitet. Das entstandene Prepolymer sollte einen Gehalt an freien NCO-Gruppen von 1 bis 8 Gew.-%, bevorzugt 1 bis 5 Gew.-% aufweisen. Die Isocyanatpolyadditionsreaktion kann in Gegenwart von Katalysatoren wie beispielsweise Organo-Zinn-Verbindungen, tert. Aminen usw. durchgeführt werden. Allerdings ist die Durchführung der Reaktion ohne Benutzung von Katalysatoren bevorzugt.

Die Prepolymere können in Gegenwart oder auch in Abwesenheit von Lösungsmitteln hergestellt werden. Geeignet sind gegenüber Isocyanatgruppen indifferente organische Lösungsmittel wie beispielsweise Dimethylformamid, Ester, Ether, Ketoester, Ketone wie Methyl-Ethyl-Keton oder Aceton, Glycol-Ether-Ester, chlorierte Kohlenwasserstoffe, aliphatische und alicyclische kohlenwasserstoffsubstituierte Pyrrolidone wie N-Methyl-2-pyrrolidone, hydrierte Furane, aromatische Kohlenwasserstoffe sowie Mischungen hiervon. Obschon die Verwendung von Lösungsmitteln mit Prepolymerherstellung nicht erforderlich ist, kann das Lösungsmittel doch hilfreich sein, um die Reaktanten in flüssiger Phase zu halten und um eine bessere Kontrolle der Reaktionstemperatur zu gewährleisten. Die Menge des gegebenenfalls eingesetzten Lösungsmittels kann in weiten Bereichen verändert werden. Es sollte jedoch soviel Lösungsmittel verwendet werden, daß eine ausreichend niedrige Viskosität des Prepolymeren erreicht wird um die Bildung der erfindungsgemäßen Polyurethan-Dispersionen zu gewährleisten, wobei zu einer erfolgreichen Dispergierung die Viskosität des Prepolymers oder der Prepolymerlösung bei der Dispergiertemperatur auch relativ hoch sein kann. Solche Viskositäten können sowohl niedriger als 100 Centipoise als auch höher als 10.000 Centipoise sein, um mit geringer Rührwirkung stabile Dispersionen zu erreichen. Von den gegebenenfalls verwendeten Lösungsmitteln werden meist 0,01 bis 10 Gew.-Teile, bevorzugt 0,02 bis 2 Gew.-Teile, bezogen auf das Gewicht des Prepolymeren, eingesetzt. Jedoch ist die Gegenwart von Lösungsmitteln im Prepolymer oder im Polyurethan nicht erforderlich, um stabile, wäßrige Dispersionen zu erhalten. Vielfach ist es bei Verwendung von Lösungsmitteln zur Herstellung des Prepolymeren und/oder des Polyurethans wünschenswert, zumindest einen Teil des Lösungsmittels aus der wäßrigen Dispersion zu entfernen. Vorteilhaft sollten solche Lösungsmittel einen niedrigeren Siedepunkt als Wasser haben, um sie so beispielsweise durch Destillation aus der wäßrigen Dispersion zu entfernen. Die Entfernung des niedrig siedenden Lösungsmittels sollte unter milden Bedingungen vollzogen werden, die dem Polyurethan nicht schaden. Falls Lösungsmittel mit höheren Siedepunkten als Wasser wie beispielsweise Dimethylformamid oder N-Methyl-pyrrolidone Verwendung finden, werden diese Lösungsmittel in der wäßrigen Polyurethan-Dispersion belassen. Sie beschleunigen die Koalescenz der Polyurethan-Partikel während der Filmbildung.

Die Überführung der gegebenenfalls zunächst in das Polyadditionsprodukt eingebauten potentiellen ionischen Gruppen in ionischen Gruppen geschieht in an sich bekannter Weise durch Neutralisation der potentiellen ionischen Gruppen.

Durch die Neutralisation der potentiell anionischen Gruppen des Prepolymers wird das Prepolymer hydrophil und läßt sich in eine stabile Dispersion überführen. Die potentiellen oder unneutralisierten

anionischen Gruppen sind in ihrer Hydrophilie für die Bildung stabiler Dispersionen nicht ausreichend. Es muß daher durch Neutralisation einer ausreichenden Menge an potentiell anionischen Gruppen dafür Sorge getragen werden, daß in Verbindung mit gegebenenfalls einzusetzenden nichtionischen hydrophilen Gruppen die Bildung von stabilen wäßrigen Dispersionen gewährleistet ist. Im allgemeinen werden mindestens 50 %, bevorzugt mindestens 80 % der potentiell anionischen Gruppen in anionische Gruppen durch Neutralisation überführt. Es können auch höhere Anteile an potentiellen anionischen Gruppen nicht neutralisiert werden, jedoch bringen diese unneutralisierten Gruppen keinen Vorteil und können die erfindungsgemäße Verbesserung der Hydrolysestabilität reduzieren. Falls nur geringe Mengen an potentiell anionischen Gruppen eingebaut sind, kann es erforderlich sein, die gesamte Menge dieser Gruppen zu neutralisieren, um die erforderliche Hydrophilie zu erreichen.

Der Neutralisationsschritt kann durchgeführt werden

1. vor der Prepolymerbildung durch Behandlung der Verbindungen mit den potentiell ionischen Gruppen,
2. nach der Prepolymerbildung aber vor Dispergierung des Prepolymers oder
3. während der Dispergierung durch Zufügen des Neutralisationsmittels zum gesamten, oder in einen Teil des Dispergierwassers.

Die Reaktion zwischen Neutralisationsmittel und der potentiell anionischen Gruppe kann bei Temperaturen zwischen 20° C und 150° C, in der Regel unter 100° C und bevorzugt zwischen 30° C und 80° C, durchgeführt werden.

Für das erfindungsgemäße Verfahren geeignete Neutralisationsmittel sind beispielsweise in US-A-3 479 310 genannt.

Die überführung der NCO-endständigen Prepolymere in wäßrige Dispersionen erfolgt nach den in der Polyurethanchemie an sich bekannten Methoden.

Bei der Zugabe von Wasser zum hydrophilen Prepolymer ist zunächst das organische Prepolymer die kontinuierliche Phase und die Viskosität steigt deutlich an. Bei weiterer Zugabe von Wasser findet eine Phasenumkehr statt und das Wasser wird zur kontinuierlichen Phase, wobei die Viskosität wieder abnimmt. Falls das Neutralisationsmittel im Dispergierwasser eingesetzt wird, ist in Verbindung mit den hydrophilen Ethylenoxideinheiten eine ausreichende Menge an anionischen Gruppen während der Phasenumkehr zur Bildung stabiler wäßriger Dispersionen erforderlich. Dies kann erreicht werden durch Zugabe des gesamten Neutralisationsmittels zu einem Teil des Dispergierwassers, der noch nicht zur Phasenumkehr führt, gefolgt von der Zugabe des restlichen Wassers.

Kein deutlicher Anstieg der Viskosität erfolgt, wenn das Prepolymer zu dem Dispergierwasser gegeben wird. Das Prepolymer wird in der Regel unter Rühren, gegebenenfalls auch in einem kontinuierlichen Prozeß unter Zuhilfenahme von Mischaggregaten, in kleinen Portionen zu dem gegebenenfalls das Neutralisationsmittel enthaltenen Dispergierwasser gegeben. Falls niedrigsiedende Lösungsmittel zur Herstellung des Prepolymeren verwendet wurden, können diese vor der Dispergierung entfernt werden, jedoch wird die Entfernung des Lösungsmittels nach der Dispergierung bevorzugt, da das Lösungsmittel die Dispersionsbildung und die Kettenverlängerung erleichtert.

Falls die Kettenverlängerung im wäßrigen Medium erfolgt, sollte der amingruppenhaltige Kettenverlängerer zugegeben werden, bevor eine deutliche Reaktion der freien NCO-Gruppe mit dem Wasser stattgefunden hat. In der Regel wird innerhalb von 30 Minuten, bevorzugt 15 Minuten, in Abhängigkeit von der Temperatur, nach der Wasserzugabe verlängert.

Die zur Kettenverlängerung der in Wasser dispergierten NCO-endständigen Prepolymere verwendeten Amine können durchschnittlich Funktionalitäten zwischen 2 und 6, bevorzugt zwischen 2 und 4 und besonders bevorzugt zwischen 2 und 3, aufweisen, wobei unter durchschnittlicher Funktionalität die durchschnittliche Anzahl der Amingruppen pro Molekül zu verstehen ist. Die gewünschten Funktionalitäten können durch Mischung verschiedener Amine erhalten werden.

Geeignete Amine sind insbesondere Kohlenwasserstoffe mit 2 bis 6 Amingruppen, die Isocyanat-aktive Wasserstoffatome enthalten. Die Polyamine sind im allgemeinen aromatisch, aliphatisch oder alicyclisch und enthalten zwischen 1 und 30 Kohlenstoffatome, bevorzugt zwischen 2 und 15 Kohlenstoffatome und besonders bevorzugt zwischen 2 und 10 Kohlenstoffatome. Diese Polyamine können weitere Substituenten tragen, vorausgesetzt, es sind keine gegenüber Isocyanatgruppen reaktive Gruppen. Beispiele von im Sinne der Erfindung geeigneten Polyaminen sind bereits unter den Kettenverlängerungsmitteln aufgeführt worden und werden ergänzt durch Diethylentriamin, Triethylen-tetramin, Tetraethylen-pentamin, Pentaethylen-hexamin, N,N,N-Tris-(2-aminoethyl)amin, N-(2-Piperazinoethyl)-ethylen-diamine, N,N′-Bis-(2-Aminoethyl)-piperazin, N,N,N′-Tris-(2-aminoethyl)-ethylendiamin, N-[N-(2-Aminoethyl)-2-aminoethyl]-N′-(2-aminoethyl)-piperazin, N-(2-Aminoethyl)-N′-(2-piperazinoethyl)-ethylen-diamine, N,N-Bis-(2-aminoethyl)-N-(2-piperazinoethyl)-amin, N,N-Bis-(2-piperazinoethyl)-amin, Polyethylene-imine, Iminobispropylamin, Guanidin, Melamin, N-(2-Aminoethyl)-1,3-propan-diamin, 3,3′-Diamino-benzidin, 2,4,6-Triaminopyrimidin, Polyoxypropylenamine, Tetrapropylenepentamin, Tripropylenetetramin, N,N-Bis-(6-aminohexyl)amin, N,N′-Bis-(3-aminopropyl)-ethylendiamin und 2,4-Bis-(4′-aminobenzyl)-anilin. Bevorzugte Polyamine sind 1-Amino-3-aminomethyl-3,5,5-trimethyl-cyclohexan (Isophorendiamine oder IPBA), Bis-(4-aminocyclohexyl)-methan, Bis-(4-amino-3-methyl-cyclohexyl)-methan, 1,6-Diaminohexan, Ethylendiamin, Diethylen-triamin, Triethylen-tetramin, Tetraethylenpentamin, N,N′-Dimethylethylendiamin, NMethylethylendiamin und Pentaethylen-hexamin.

Neben den genannten Aminen mit ausschließlich Amingruppen als gegenüber NCO-Gruppen reaktive Komponente sind auch solche Amine geeignet, die neben den Amingruppen weitere nicht anionische, gegenüber NCO-Gruppen reak tionsfähige Gruppen aufweisen wie beispielsweise Ethanolamin, Diethanolamin, 2-Amino-2-hydroxymethyl-1,3propandiol oder N-(2-Aminoethyl)-ethanolamin.

Die Menge des zu verwendenden Polyamins ist abhängig von dem Gehalt an endständigen NCO-Gruppen des Prepolymers. Im allgemeinen beträgt das Verhältnis an Milliäquivalenten von endständigen NCO-Gruppen des Prepolymers zu den Amingruppen des polyfunktionellen Amins 1,0:0,20 bis 1,0:1,1, bevorzugt 1,0:0,3 bis 1,0:0,98. Die Reaktion zwischen den endständigen NCO-Gruppen und den Polyaminen wird zwischen 5 und 90 °C, bevorzugt zwischen 20 und 80 °C, durchgeführt. Das Polyamin kann sowohl als Reinsubstanz als auch verdünnt mit Wasser oder geeigneten organischen Lösungsmitteln, wie sie vorher bei der Herstellung des Prepolymeren schon beschrieben wurden, zu dem in Wasser dispergierten Prepolymer zugegeben werden.

Die nach dem beschriebenen Verfahren hergestellten Polyurethandispersionen können auch im Anschluß an die Dispersionsbildung mit Isocyanaten modifiziert werden, wie es in DOS 2 708 442 beschrieben wird.

Den erfindungsgemäßen Lösungen und Dispersionen können vor der Anwendung Polyisocyanatverbindungen mit mindestens zwei freien Isocyanatgruppen zugesetzt werden.

Besonders bevorzugt werden Polyisocyanatverbindungen eingesetzt, die in Wasser emulgierbar sind. Dies sind z.B. die in EP 206 059 und DE-OS 3 112 117 beschriebenen Verbindungen. Eingesetzt werden die Polyisocyanatverbindungen in einer Menge von 0,1-20 Gew.-%, bevorzugt 0,5 bis 10 Gew.-%, besonders bevorzugt 1,5 bis 6 Gew.-% bezogen auf Lösung bzw. Dispersion. Durch diesen Zusatz ist eine erhebliche Verbesserung der Wärmefestigkeit von Klebungen, die unter Anwendung der erfindungsgemäßen Lösungen und Dispersionen hergestellt werden, zu erzielen.

Das letztlich erhaltene Produkt ist eine stabile, wäßrige Polyurethan-Dispersion mit einem Feststoffgehalt bis 60 Gew.-% und besonders bevorzugt 25 bis 50 Gew.-%. Die Dispersionen können in einem beliebigen Verhältnis weiter verdünnt werden. Der Teilchendurchmesser liegt in der Regel unter 1 µm, bevorzugt zwischen 0,001 und 0,5 µm. Der durchschnittliche Teilchendurchmesser sollte unter 0,5 µm, bevorzugt zwischen 0,01 und 0,3 µm, liegen.

Bei sehr niedrigem Gehalt an hydrophilen Gruppen können auch mittlere Teilchendurchmesser zwischen 5 µm und ca. 50 µm erhalten werden. Derartige Dispersionen sind beispielsweise für die Herstellung von Polyurethanpulvern von Interesse.

Die Dispersionen können mit anderen Dispersionen verschnitten werden, wie z.B. mit Polyvinylacetat, Polyethylen-, Polystyrol-, Polybutadien-, Polyvinylchlorid-, Polyacrylat- und Copolymerisat-Kunststoff-Dispersionen. Auch der Zusatz von an sich bekannten chemisch nicht fixierten, vorzugsweise ionischen Emulgatoren, ist möglich, jedoch selbstverständlich nicht erforderlich.

Schließlich können auch Füllstoffe, Weichmacher, Pigmente, Ruß- und Kieselsäuresole, Aluminium-, Ton-, Asbest-Dispersionen in die Dispersionen eingearbeitet werden.

Die Dispersionen der Polyurethanmassen in Wasser sind meist stabil, lager- und versandfähig und können zu beliebig späterem Zeitpunkt, z.B. formgebend, verarbeitet werden. Sie trocknen im allgemeinen unmittelbar zu formstabilen Kunststoffüberzügen auf, jedoch kann die Formgebung der Verfahrensprodukte auch in Gegenwart von an sich bekannten Vernetzungsmitteln erfolgen. Je nach der gewählten chemischen Zusammensetzung und dem Gehalt an Urethangruppen, erhält man Polyurethane mit unterschiedlichen Eigenschaften. So können weiche klebrige Massen, thermoplastiche und gummielastische Produkte der verschiedensten Härtegrade bis zu glasharten Duroplasten erhalten werden. Die Hydrophilie der Produkte kann ebenfalls in gewissen Grenzen schwanken. Die elastischen Produkte lassen sich bei höheren Temperaturen, beispielsweise 100 bis 180 °C, thermoplastisch verarbeiten, sofern sie nicht chemisch vernetzt sind.

Die Verfahrensprodukte sind zur Beschichtung bzw. zum Überziehen und zum Imprägnieren von gewebten und nichtgewebten Textilien, Leder, Papier, Holz, Metallen, Keramik, Stein, Beton, Bitumen, Hartfaser, Stroh, Glas, Porzellan, Kunststoffen der verschiedensten Art, Glasfasern, zur antistatischen und knitterfreien Ausrüstung, als Binder für Vliese, Klebstoffe, Haftvermittler, Kaschierungsmittel, Hydrophobiermittel, Weichmacher, Bindemittel, z.B. für Kork- oder Holzmehl, Glasfasern, Asbest, papierartige Materialien, Plastik- oder Gummiabfälle, keramische Materialien, als Hilfsmittel im Zeugdruck und in der Papierindustrie, als Zusatz zu Polymerisaten, als Schlichtemittel, beispielsweise für Glasfasern, und zur Lederausrüstung geeignet.

Vorzugsweise werden Dispersionen bzw. Pasten dabei auf eine poröse Unterlage appliziert, die anschließend mit dem Fertigprodukt verbunden bleibt, wie z.B. gewebte oder nichtgewebte textile Gebilde bzw. Fasermatten, Filze oder Vliese, auch Papiervliese, Schaumstoff-Folien oder Spaltleder, die vermöge ihrer Saugwirkung eine so fortige Verfestigung des Überzuges bewirken. Anschließend wird bei erhöhter Temperatur getrocknet und gegebenenfalls verpreßt. Die Trocknung kann aber auch auf glatten porösen oder nichtporösen Materialien, z.B. Metall, Glas, Papier, Karton, keramische Materialien, Stahlblech, Silikon-Kautschuk, Aluminiumfolie, erfolgen, wobei das fertige Flächengebilde anschließend abgehoben und als solches verwendet bzw. nach dem Umkehrverfahren durch Kleben, Flammkaschieren, Kalandern auf ein Substrat aufgebracht wird. Die Applikation nach dem Umkehrverfahren kann dabei zu einem beliebigen Zeitpunkt vorgenommen werden.

Durch Mitverwendung von Vinylpolymerisaten oder aktiven bzw. inaktiven Füllstoffen kann man die Eigenschaften der Verfahrensprodukte abwandeln. Verwendbar sind beispielsweise Polyethylen, Polypropylen, Polyvinylacetat, Ethylen-Vinylacetat-Copolymerisate, die gegebenenfalls (teilweise) verseift und/oder mit Vinylchlorid gepfropft sein können, Styrol-Butadien-Copolymerisate, Ethylen(Pfropf)-Copolymerisate, Polyacrylate, Ruß, Kieselsäure, Asbest, Talkum, Kaolin, Titandioxid, Glas als Pulver oder in Form von Fasern, Cellulose. Je nach erwünschtem Eigenschaftsbild und Verwendungszweck der Endprodukte können bis zu 70 %, bezogen auf Gesamttrockensubstanz, solcher Füllstoffe im Endprodukt enthalten sein.

Selbstverständlich können auch Farbstoffe, Pigmente, Weichmacher oder die rheologischen Eigenschaften beeinflussende Zusätze beigefügt werden.

Die Trocknung der nach verschiedenen Applikationstechniken erhaltenen Produkte kann bei Raumtemperatur oder bei erhöhter Temperatur erfolgen. Die im Einzelfall zu wählende Trocknungstemperatur, die außer von der chemischen Zusammensetzung des Materials vor allem vom Feuchtigkeitsgehalt, der Trockenzeit und der Schichtdicke abhängt, wird leicht durch einen Vortest ermittelt. Bei gegebener Erhitzungszeit muß die Trockentemperatur in jedem Fall unter der Verfestigungstemperatur liegen. Anschließend können die Flächengebilde zur Erhöhung der Widerstandsfähigkeit ihrer Oberfläche mit einer Appretur (Finish) überzogen werden. Bevorzugt werden hierfür wiederum wäßrige Dispersionen oder Lösungen verwendet.

Aus feinteiligen Dispersionen und Solen erhaltene sehr harte Polyurethane sind als Einbrennlacke und teilweise sogar als lufttrocknende Lacke geeignet. Sie verbinden hohe Härte und Elastizität mit gutem Hochglanz und - bei Verwendung mit aliphatischen Diisocyanaten - mit guter Licht- und Wetterechtheit.

Die nachfolgenden Beispiele sollen die Zusammensetzung, Herstellung und einige physikalische Eigenschaften erläutern.

Die in den angeführten Beispielen angegebenen Teile beziehen sich auf Gewichtsteile. Zur Beurteilung der Qualität der Dispersionen werden zwei Kriterien herangezogen:

1. Teilchengröße aus dynamischer Lichtstreuung
2. Zentrifugenstabilität (15 Minuten bei 4.500 U/min); die Beurteilung reicht von 1 (keine Sedimentbildung) bis 6 (unvollständig sedimentiert).

<u>Beispiel 1</u>

In dem ersten Schritt der Prepolymerherstellung werden 80 Teile eines propoxylierten Adduktes von 2-Butendiol-1,4 und $NaHSO_3$ (Molekulargewicht 430) in Form einer 70 %igen Lösung in Toluol (Diolsulfonat) mit 88,6 Teilen Isophorondiisocyanat (IPDI) und 33,6 Teilen Hexamethylendiisocyanat (HDI) innerhalb 1,6 Stunden bei 90 °C zur Reaktion gebracht. Man erhält ein Reaktionsprodukt mit einem NCO-Gehalt von 19,1%.

Im zweiten Schritt der Prepolymerherstellung werden 116,7 Teile des Reaktionsproduktes aus dem ersten Reaktionsschritt mit 400 Teilen eines vorher entwässerten Adipinsäure-Butandiol-1,4-Polyesters (Molekulargewicht 2.250) bei 100 °C über 2 Stunden zur Reaktion gebracht. Es stellt sich ein konstanter NCO-Wert von 2,6 % ein. Das Prepolymer wird anschließend auf 70 °C abgekühlt.

453 Teile des mehrstufig hergestellten Prepolymeren werden in 600 Teilen Wasser (50 °C warm) unter starkem Rühren dispergiert. Zur Kettenverlängerung wird eine Lösung von 6,0 Teilen Ethylendiamin in 100 Teilen Wasser über einen Zeitraum von 5 Minuten bei 50 °C zugegeben und ca. 2 Stunden nachgerührt.

Man erhält eine feinteilige Dispersion mit einem Feststoffgehalt von 43,4 Gew.-% und einer Viskosität von 280 cP. Der Gehalt an $SO^{\ominus}_3$-Gruppen beträgt 1,5 Gew.-%, bezogen auf Feststoff. Die Teilchengröße beträgt 185 nm und die Zentrifugenstabilität ist 1.

Beispiel 2 (Vergleichsbeispiel zu Beispiel 1)

Aus den Aufbaukomponenten aus Beispiel 1 wird ein Prepolymer gleicher Zusammensetzung hergestellt, indem der Polyester, das Diolsulfonat, das IPDI und das HDI in einem Schritt bei 100° C zur Reaktion gebracht werden. Es stellt sich ein konstanter NCO-Wert von 2,9 % ein. Das Prepolymer wird anschließend auf 70° C abgekühlt.

490 Teile des einstufig hergestellten Prepolymeren werden in 600 Teilen Wasser (50° C warm) unter starkem Rühren dispergiert. Zur Kettenverlängerung wird eine Lösung von 7,0 Teilen Ethylendiamin in 150 Teilen Wasser über einen Zeitraum von 5 Minuten bei 50° C zugegeben und ca. 2 Stunden nachgerührt.

Unter diesen Bedingungen wird keine stabile Dispersion erhalten.

Beispiel 3

In dem ersten Schritt der Prepolymerherstellung werden 50 Teile des Diolsulfonats aus Beispiel 1 mit 145 Teilen Dicyclohexylmethan-4,4′-diisocyanat in 32,5 Teilen N-Methylpyrrolidon (NMP) innerhalb 1 Stunde bei 90° C zur Reaktion gebracht. Man erhält ein Reaktionsprodukt mit einem NCO-Gehalt von 16,7 %.

Im zweiten Schritt der Prepolymerherstellung werden 194 Teile des Reaktionsproduktes aus dem ersten Reaktionsschritt mit 400 Teilen eines vorher entwässerten Adipin säure-Butandiol-1,4-Polyesters (Molekulargewicht 2.250), 28 Teilen eines auf n-Butanol gestarteten Polyethylenoxid-Polypropylenoxid-Polyethers (Molgewicht 2.145; Molverhältnis Ethylenoxid:Propylenoxid 83:17) und 16 Teile eines auf Bisphenol-A gestarteten Propylenoxid-Ethers (OH-Zahl 197) bei 100 bis 120° C über 5 Stunden zur Reaktion gebracht. Es stellt sich ein konstanter NCO-Wert von 2,1 % ein. Das Prepolymer wird anschließend auf 70° C abgekühlt.

545 Teile des mehrstufig hergestellten Prepolymeren werden in 600 Teilen Wasser (35° C warm) unter starkem Rühren dispergiert. Zur Kettenverlängerung wird eine Lösung von 5,9 Teilen Ethylendiamin in 220 Teilen Wasser über einen Zeitraum von 5 Minuten bei 50° C zugegeben und ca. 2 Stunden nachgerührt.

Man erhält eine feinteilige Dispersion mit einem Feststoffgehalt von 37,8 Gew.-% und einer Viskosität von 23,4 cP. Der Gehalt an $SO^{\ominus}_3$-Gruppen beträgt 0,9 Gew.-%, bezogen auf Feststoff. Die Teilchengröße beträgt 208 nm und die Zentrifugenstabilität ist 2.

Beispiel 4 (Vergleichsbeispiel zu Beispiel 3)

Aus den Aufbaukomponenten aus Beispiel 3 wird ein Prepolymer gleicher Zusammensetzung hergestellt, indem der Polyester, das Diolsulfonat, das Diisocyanat und die beiden Polyether in einem Schritt bei 100° C zur Reaktion gebracht werden. Es stellt sich ein konstanter NCO-Wert von 2,1 % ein. Das Prepolymer wird anschließend auf 70° C abgekühlt. 527 Teile des einstufig hergestellten Prepolymeren werden in 600 Teilen Wasser (35° C warm) unter starkem Rühren dispergiert. Zur Kettenverlängerung wird eine Lösung von 5,5 Teilen Ethylendiamin in 200 Teilen Wasser über einen Zeitraum von 5 Minuten bei 50° C zugegeben und ca. 2 Stunden nachgerührt.

Man erhält eine grobteilige Dispersion mit einem Feststoffgehalt von 38,5 Gew.-% und einer Viskosität von 14 cP. Der Gehalt an $SO^{\ominus}_3$-Gruppen beträgt 0,9 Gew.-%, bezogen auf Feststoff. Die Teilchengröße beträgt 268 nm und die Zentrifugenstabilität ist 3 bis 4.

Beispiel 5

In dem ersten Schritt der Prepolymerherstellung werden 43 Teile des Diolsulfonats aus Beispiel 1 in 27,8 Teilen N-Methylpyrrolidon tropfenweise zu 87,7 Teilen Toluylendiisocyanat (2,4:2,6 Isomerenverhältnis 80:20) und 0,4 Teilen p-Toluolsulfonsäure bei einer Reaktionstemperatur von 50° C zugegeben. Man erhält ein Reaktionsprodukt mit einem NCO-Gehalt von 22,3 %.

Im zweiten Schritt der Prepolymerherstellung werden 137 Teile des Reaktionsproduktes aus dem ersten Reaktionsschritt mit 400 Teilen eines vorher entwässerten Adipinsäure-Butandiol-1,4-Polyesters (Molekulargewicht 2.250), 28 Teilen eines auf n-Butanol gestarteten Polyethylenoxid-Polypropylenoxid-Polyethers (Molgewicht 2.145; Molverhältnis Ethylenoxid:Propylenoxid 83:17) und 16 Teile eines auf Bisphenol-A gestarteten Propylenoxid-Ethers (OH-Zahl 197) bei 80°C über 2 Stunden zur Reaktion gebracht. Es stellt sich ein konstanter NCO-Wert von 1,8 % ein. Das Prepolymer wird anschließend auf 70° C abgekühlt.

513 Teile des mehrstufig hergestellten Prepolymeren werden in 600 Teilen Wasser (38° C warm) unter starkem Rühren dispergiert. Zur Kettenverlängerung wird eine Lösung von 4,7 Teilen Ethylendiamin in 150 Teilen Wasser über einen Zeitraum von 5 Minuten bei 50° C zugegeben und ca. 2 Stunden nachgerührt.

Man erhält eine feinteilige Dispersion mit einem Feststoffgehalt von 41,9 Gew.-% und einer Viskosität von 84 cP. Der Gehalt an $SO^{\ominus}_3$-Gruppen beträgt 0,8 Gew.-%, bezogen auf Feststoff. Die Teilchengröße beträgt 194 nm und die Zentrifugenstabilität ist 1.

Beispiel 6 (Vergleichsbeispiel zu Beispiel 5)

Aus den Aufbaukomponenten aus Beispiel 5 wird ein Prepolymer gleicher Zusammensetzung hergestellt, indem der Polyester, das Diolsulfonat, das Diisocyanat und die beiden Polyether in einem Schritt bei 100°C zur Reaktion gebracht werden. Es stellt sich ein konstanter NCO-Wert von 1,6 % ein. Das Prepolymer wird anschließend auf 70° C abgekühlt.

500 Teile des einstufig hergestellten Prepolymeren werden in 600 Teilen Wasser (35° C warm) unter starkem Rühren dispergiert. Zur Kettenverlängerung wird eine Lösung von 3,9 Teilen Ethylendiamin in 150 Teilen Wasser über einen Zeitraum von 5 Minuten bei 50° C zugegeben und ca. 2 Stunden nachgerührt.

Man erhält eine grobteilige Dispersion mit einem Feststoffgehalt von 38,8 Gew.-%. Der Gehalt an $SO^{\ominus}_3$-Gruppen beträgt 0,8 Gew.-%, bezogen auf Feststoff. Die Teilchengröße beträgt 294 nm und die Zentrifugenstabilität ist 5 bis 6.

Beispiel 7

In dem ersten Schritt der Prepolymerherstellung werden 43 Teile des Diolsulfonats aus Beispiel 1 in 74,5 Teilen Isophorondiisocyanat und 28,2 Teilen Hexamethylendiisocyanat bei einer Reaktionstemperatur von 80° C zur Reaktion gebracht. Man erhält ein Reaktionsprodukt mit einem NCO-Gehalt von 24,8 %.

Im zweiten Schritt der Prepolymerherstellung werden 119 Teile des Reaktionsproduktes aus dem ersten Reaktionsschritt mit 400 Teilen eines vorher entwässerten Adipinsäure-Butandiol-1,4-Polyesters (Molekulargewicht 2.250), 28 Teilen eines auf n-Butanol gestarteten Polyethylenoxid-Polypropylenoxid-Polyethers (Molgewicht 2.145; Molverhältnis Ethylenoxid:Propylenoxid 83:17) und 16 Teile eines auf Bisphenol-A gestarteten Propylenoxid-Ethers (OH-Zahl 197) bei 95°C über 3 Stunden zur Reaktion gebracht. Es stellt sich ein konstanter NCO-Wert von 1,5 % ein. Das Prepolymer wird anschließend auf 70° C abgekühlt.

500 Teile des mehrstufig hergestellten Prepolymeren werden in 600 Teilen Wasser (50° C warm) unter starkem Rühren dispergiert, Zur Kettenverlängerung wird eine Lösung von 3,7 Teilen Ethylendiamin in 150 Teilen Wasser über einen Zeitraum von 5 Minuten bei 50° C zugegeben und ca. 2 Stunden nachgerührt.

Man erhält eine feinteilige Dispersion mit einem Feststoffgehalt von 40,8 Gew.-% und einer Viskosität von 1.122 cP. Der Gehalt an $SO^{\ominus}_3$-Gruppen beträgt 0,8 Gew.-%, bezogen auf Feststoff. Die Teilchengröße beträgt 136 nm und die Zentrifugenstabilität ist 1.

Beispiel 8 (Vergleichsbeispiel zu Beispiel 7)

Aus den Aufbaukomponenten aus Beispiel 7 wird ein Prepolymer gleicher Zusammensetzung hergestellt, indem der Polyester, das Diolsulfonat, die Diisocyanate und die beiden Polyether in einem Schritt bei 95° C zur Reaktion gebracht werden. Es stellt sich ein konstanter NCO-Wert von 1,7 % ein. Das Prepolymer wird anschließend auf 70° C abgekühlt.

500 Teile des einstufig hergestellten Prepolymeren werden in 650 Teilen Wasser (50° C warm) unter starkem Rühren dispergiert. Zur Kettenverlängerung wird eine Lösung von 4,2 Teilen Ethylendiamin in 100 Teilen Wasser über einen Zeitraum von 5 Minuten bei 50° C zugegeben und ca. 2 Stunden nachgerührt.

Man erhält eine grobteilige Dispersion mit einem Feststoffgehalt von 41 Gew.-% und einer Viskosität von 91 cP. Der Gehalt an $SO_3^{\ominus}$-Gruppen beträgt 0,8 Gew.-%, bezogen auf Feststoff. Die Teilchengröße beträgt 184 nm und die Zentrifugenstabilität ist 1 bis 2.

Beispiel 9

In dem ersten Schritt der Prepolymerherstellung werden 92,5 Teile des Diolsulfonats aus Beispiel 1 mit 157,5 Teilen Isophorondiisocyanat bei einer Reaktionstemperatur von 100 °C zur Reaktion gebracht. Man erhält ein Reaktionsprodukt mit einem NCO-Gehalt von 18,7 %.

Im zweiten Schritt der Prepolymerherstellung werden 203 Teile des Reaktionsproduktes aus dem ersten Reaktionsschritt mit 400 Teilen eines vorher entwässerten Adipinsäure-Butandiol-1,4-Polyesters (Molekulargewicht 2.250), 28 Teilen eines auf n-Butanol gestarteten Polyethylenoxid-Polypropylenoxid-Polyethers (Molgewicht 2.145; Molverhältnis Ethylenoxid:Propylenoxid 83:17) und 16 Teile eines auf Bisphenol-A gestarteten Propylenoxid-Ethers (OH-Zahl 197) bei 100 °C über 4 Stunden zur Reaktion gebracht. Es stellt sich ein konstanter NCO-Wert von 3,2 % ein. Das Prepolymer wird anschließend auf 70 °C abgekühlt.

545 Teile des mehrstufig hergestellten Prepolymeren werden in 600 Teilen Wasser (50 °C warm) unter starkem Rühren dispergiert. Zur Kettenverlängerung wird eine Lösung von 8,7 Teilen Ethylendiamin in 100 Teilen Wasser über einen Zeitraum von 5 Minuten bei 50 °C zugegeben und ca. 2 Stunden nachgerührt.

Man erhält eine feinteilige Dispersion mit einem Feststoffgehalt von 45,6 Gew.-%. Der Gehalt an $SO^{\ominus}_3$-Gruppen beträgt 1,5 Gew.-%, bezogen auf Feststoff. Die Teilchengröße beträgt 87 nm und die Zentrifugenstabilität ist 1.

Beispiel 10 (Vergleichsbeispiel zu Beispiel 9)

Aus den Aufbaukomponenten aus Beispiel 9 wird ein Prepolymer gleicher Zusammensetzung hergestellt, indem der Polyester, das Diolsulfonat, das Diisocyanat und die beiden Polyether in einem Schritt bei 110 °C zur Reaktion gebracht werden. Es stellt sich ein konstanter NCO-Wert von 3,2 % ein. Das Prepolymer wird anschließend auf 70 °C abgekühlt.

580 Teile des einstufig hergestellten Prepolymeren werden in 650 Teilen Wasser (50 °C warm) unter starkem Rühren dispergiert. Zur Kettenverlängerung wird eine Lösung von 9,2 Teilen Ethylendiamin in 220 Teilen Wasser über einen Zeitraum von 5 Minuten bei 50 °C zugegeben und ca. 2 Stunden nachgerührt.

Man erhält eine grobteilige Dispersion mit einem Feststoffgehalt von 42 Gew.-%. Der Gehalt an $SO^{\ominus}_3$-Gruppen beträgt 1,5 Gew.-%, bezogen auf Feststoff. Die Teilchengröße beträgt 138 nm und die Zentrifugenstabilität ist 1.

Beispiel 11

In dem ersten Schritt der Prepolymerherstellung werden 70 Teile des Diolsulfonats aus Beispiel 1 mit 190 Teilen Isophorondiisocyanat bei einer Reaktionstemperatur von 120 °C über 4 Stunden zur Reaktion gebracht. Man erhält ein Reaktionsprodukt mit einem NCO-Gehalt von 24,2 %.

Im zweiten Schritt der Prepolymerherstellung werden 209 Teile des Reaktionsproduktes aus dem ersten Reaktionsschritt mit 400 Teilen eines vorher entwässerten Adipinsäure-Butandiol-1,4-Polyesters (Molekulargewicht 2.250) und 12 Teilen n-Butandiol-1,4 bei 100 °C über 3 Stunden zur Reaktion gebracht. Es stellt sich ein konstanter NCO-Wert von 3,8 % ein. Das Prepolymer wird anschließend auf 70 °C abgekühlt,

540 Teile des mehrstufig hergestellten Prepolymeren werden in 600 Teilen Wasser (50 °C warm) unter starkem Rühren dispergiert. Zur Kettenverlängerung wird eine Lösung von 10,2 Teilen Ethylendiamin in 150 Teilen Wasser über einen Zeitraum von 5 Minuten bei 50 °C zugegeben und ca. 2 Stunden nachgerührt.

Man erhält eine feinteilige Dispersion mit einem Feststoffgehalt von 41,6 Gew.-%. Der Gehalt an $SO^{\ominus}_3$-Gruppen beträgt 1,2 Gew.-%, bezogen auf Feststoff, Die Teilchengröße beträgt 104 nm und die Zentrifugenstabilität ist 1.

Beispiel 12 (Vergleichsbeispiel zu Beispiel 10)

Aus den Aufbaukomponenten aus Beispiel 11 wird ein Prepolymer gleicher Zusammensetzung hergestellt, indem der Polyester, das Diolsulfonat, das Diisocyanat und Butandiol-1,4 in einem Schritt bei 110 °C zur Reaktion gebracht werden. Es stellt sich ein konstanter NCO-Wert von 4,0 j. ein. Das Prepolymer wird anschließend auf 70 °C abgekühlt.

534 Teile des einstufig hergestellten Prepolymeren werden in 650 Teilen Wasser (50 °C warm) unter starkem Rühren dispergiert. Zur Kettenverlängerung wird eine Lösung von 10,6 Teilen Ethylendiamin in 150 Teilen Wasser über einen Zeitraum von 5 Minuten bei 50 °C zugegeben und ca. 2 Stunden nachgerührt.

Man erhält eine grobteilige Dispersion mit einem Feststoffgehalt von 43,7 Gew.-%. Der Gehalt an $SO^{\ominus}_3$-Gruppen beträgt 1,2 Gew.-%, bezogen auf Feststoff. Die Teilchengröße beträgt 217 nm und die Zentrifugenstabilität ist 2.

Beispiel 13

In dem ersten Schritt der Prepolymerherstellung werden 45 Teile des Diolsulfonats aus Beispiel 1 mit 116,7 Teilen Isophorondiisocyanat und 37,9 Teilen Hexamtehylendiisocyanat bei einer Reaktionstemperatur von 90 °C über 1,5 Stunden zur Reaktion gebracht. Man erhält ein Reaktionsprodukt mit einem NCO-Gehalt von 28,5 %.

Im zweiten Schritt der Prepolymerherstellung werden 160 Teile des Reaktionsproduktes aus dem ersten Reaktionsschritt mit 400 Teilen eines vorher entwässerten Adipinsäure-Hexandiol-1,6-Neopentylglycol-Polyesters (Molekulargewicht 1.700) und 28 Teilen eines auf n-Butanol gestarteten Polyethylenoxid-Polypropylenoxid-Polyesters (Molgewicht 2.145; Molverhältnis Ethylenoxid zu Propylenoxid 83:17) bei 100 °C über 4 Stunden zur Reaktion gebracht. Es stellt sich ein konstanter NCO-Wert von 4,1 % ein. Das Prepolymer wird anschließend auf 70 °C abgekühlt.

520 Teile des mehrstuf ig hergestellten Prepolymeren werden in 600 Teilen Wasser (50 °C warm) unter starkem Rühren dispergiert. Zur Kettenverlängerung wird eine Lösung von 32,8 Teilen Isophorondiamin in 180 Teilen Wasser über einen Zeitraum von 5 Minuten bei 50 °C zugegeben und ca. 2 Stunden nachgerührt.

Man erhält eine feinteilige Dispersion mit einem Feststoffgehalt von 45 Gew.-% und einer Viskosität von 60 cP. Der Gehalt an $SO^{\ominus}_3$-Gruppen beträgt 0,8 Gew.-%, bezogen auf Feststoff. Die Teilchengröße beträgt 259 nm und die Zentrifugenstabilität ist 1.

Beispiel 14 (Vergleichsbeispiel zu Beispiel 13)

Aus den Aufbaukomponenten aus Beispiel 13 wird ein Prepolymer gleicher Zusammensetzung hergestellt, indem der Polyester, das Diolsulfonat, die Diisocyanate und der Polyether in einem Schritt bei 95 °C zur Reaktion gebracht werden. Es stellt sich ein konstanter NCO-Wert von 4,1 % ein. Das Prepolymer wird anschließend auf 70 °C abgekühlt.

515 Teile des einstufig hergestellten Prepolymeren werden in 600 Teilen Wasser (50 °C warm) unter starkem Rühren dispergiert. Zur Kettenverlängerung wird eine Lösung von 32 Teilen Isophorondiamin in 180 Teilen Wasser über einen Zeitraum von 5 Minuten bei 50 °C zugegeben und ca. 2 Stunden nachgerührt.

Man erhält eine grobteilige Dispersion mit einem Feststoffgehalt von 42,8 Gew.-%. Der Gehalt an $SO^{\ominus}_3$-Gruppen beträgt 0,8 Gew.-%, bezogen auf Feststoff. Die Teilchengröße beträgt 325 nm und die Zentrifugenstabilität ist 2.

## Ansprüche

1. Verfahren zur Herstellung von stabilen PolyurethanPolyharnstoffdispersionen in einem mehrstufigen Verfahren durch Umsetzung eines Isocyanates a) mit wenigstens zwei isocyanatreaktiven Verbindungen b1) und b2) von denen die Verbindung b1) wenigstens eine ionische oder potentiell ionische hydrophile Gruppe aufweist, dadurch gekennzeichnet, daß

1) das Isocyanat a) mit der Verbindung b1) umgesetzt wird und anschließend

2) das hierbei entstehende Produkt mit der Verbindung b2) umgesetzt wird und gegebenenfalls mit einer Ethylenoxideinheiten enthaltenden Verbindung b3) und

3) das erhaltene Prepolymere in Wasser dispergiert wird, wobei der Gehalt an ionischen Gruppen im Prepolymeren maximal 50 Milliäquivalenten pro 100 g Prepolymer beträgt.

2. Verfahren nach Anspruch 1, dadurch gekennzeichnet, daß das Prepolymer ein lineares Prepolymer mit einem Molekulargewicht von maximal 25.000 ist.

3. Verfahren nach wenigstens einem der vorhergehenden Ansprüche, dadurch gekennzeichnet, daß das Prepolymer vorzugsweise während oder nach der Dispergierung mit einem Kettenverlängerer umgesetzt wird.

4. Verfahren nach wenigstens einem der vorhergehenden Ansprüche, dadurch gekennzeichnet, daß die Komponente b2) ein Molekulargewicht von mindestens 1.500 hat.

5. Verfahren nach wenigstens einem der vorhergehenden Ansprüche, dadurch gekennzeichnet, daß als Aufbaukomponente b1) difunktionelle Verbindungen mit $SO_3$-Gruppen eingesetzt werden.

6. Verfahren nach wenigstens einem der vorhergehenden Ansprüche, dadurch gekennzeichnet, daß als Aufbaukomponente b1) difunktionelle Verbindungen mit ionischen oder potentiell ionischen Gruppen eingesetzt werden.

7. Verfahren nach wenigstens einem der vorhergehenden Ansprüche, dadurch gekennzeichnet, daß das Isocyanate a) ausgewählt ist aus der Gruppe Isophorondiisocyanat, Dicyclohexylmethan-4,4′-diisocyanat, Toluylendiisocyanat und Hexamethylendiisocyanat, daß weiter die Verbindung b1) das propoxylierte Addukt aus 2-Butendiol-1,4 und $NaHSO_3$ ist und schließlich die Verbindung b2) ausgewählt ist aus der Gruppe eines Adipinsäure-butandiol-1,4-polyesters, Adipinsäure-hexandiol-1,6-polyesters und eines Adipinsäure-hexandiol-1,6-neopentylglykol-polyesters.

8. Verfahren nach wenigstens einem der vorhergehenden Ansprüche, dadurch gekennzeichnet, daß als Aufbaukomponente b1) Sulfonsäuregruppen enthaltende Diole eingesetzt werden, die vor, während oder nach der Prepolymerbildung durch Neutralisation in ionische Gruppen überführt werden.

9. Dispersionen nach wenigstens einem der vorhergehenden Ansprüche.

10. Verwendung der Dispersionen gemäß Anspruch 9, zur Herstellung von Beschichtungen oder zur Herstellung von Klebstoffen.